# EUROPEAN PATENT SPECIFICATION

(11) **EP 3 925 819 B1**
(45) Date of publication and mention of the grant of the patent: **04.12.2024**
(21) Application number: 20841021.7
(22) Date of filing: 30.06.2020
(51) Int. Cl.: B60L 58/12, H01M 10/42, H02M 3/335, B60L 53/22

(54) **POWER SUPPLY ENSURING SYSTEM AND POWER SUPPLY ENSURING METHOD**
SYSTEM UND VERFAHREN ZUR SICHERSTELLUNG DER STROMVERSORGUNG
SYSTÈME D'ASSURANCE D'ALIMENTATION ÉLECTRIQUE ET PROCÉDÉ D'ASSURANCE D'ALIMENTATION ÉLECTRIQUE

(30) Priority: 16.07.2019 CN 201910641181
(43) Date of publication of application: 22.12.2021
(73) Proprietor: Contemporary Amperex Technology (Hong Kong) Limited, Central, Central And Western District (HK)
(72) Inventor: WANG, Liansong, Ningde, Fujian 352100 (CN); DAN, Zhimin, Ningde, Fujian 352100 (CN); CAI, Fupeng, Ningde, Fujian 352100 (CN); HOU, Yizhen, Ningde, Fujian 352100 (CN); ZHANG, Wei, Ningde, Fujian 352100 (CN)
(74) Representative: Boult Wade Tennant LLP
(86) International application number: PCT/CN2020/099276
(87) International publication number: WO 2021/008354

(56) References cited:
- CN-A- 103 522 909
- CN-A- 105 553 279
- CN-A- 106 026 712
- CN-A- 107 933 335
- CN-A- 108 215 915
- CN-A- 108 656 976
- CN-U- 202 050 275
- US-A1- 2018 131 204

## Description

### TECHNICAL FIELD

This application relates to the field of battery management, and in particular, to a power supply guarantee system and a power supply guarantee method.

### BACKGROUND

Currently, energy shortage and environmental pollution are increasingly severer, and development of new-energy battery electric vehicles is crucial to reduction of vehicle tail gas and energy consumption as well as mitigation of environmental pressure. A battery management system (BMS) is an important integral part of energy management of a new energy vehicle and implements intelligent management and maintenance for a power battery system of the electric vehicles.

Generally, a vehicle lead-acid battery provides a power supply for the BMS, and is connected to a low-voltage controller through a power supply bus to power the low-voltage controller. In a conventional power supply system, once the lead-acid battery is absent in the electric vehicle and the BMS is in a sleep state, the BMS will not work normally.

CN 108 215 915 A discloses an electric energy transmission circuit and device. The electric energy transmission circuit comprises a wake-up sub-circuit, a high-voltage control sub-circuit and a power conversion sub-circuit.

CN 106026712 A discloses a switching power supply, especially a secondary-side control method and a secondary-side control circuit of an isolated switching power supply.

### SUMMARY

An embodiment of this application provides a power supply guarantee system and a power supply guarantee method to keep providing a power supply to a BMS when the BMS is in a sleep state, so that the BMS is always in a powered state and normal operation of the BMS is ensured.

According to a first aspect of embodiments of this application, a power supply guarantee system is provided, and applied to a BMS. The power supply guarantee system of the invention comprises the features recited in independent claim 1.

Preferred features of the power supply guarantee system according to the invention are defined in the dependent claims numbered 2 to 13.

According to another aspect of the embodiments of this application, a power supply guarantee method is provided, and applied to the power supply guarantee system described above, and the power supply guarantee method comprises the steps recited in claim 14.

With the power supply guarantee system and the power supply guarantee method according to the embodiments of this application, when the BMS is in a sleep state, the BMS is periodically woken up to ensure that the BMS is in a powered state, and to facilitate the BMS to collect and store relevant information in the battery pack of an integrated vehicle. With the power supply guarantee system and the power supply guarantee method according to the embodiments of this application, the BMS is woken up without resorting to a vehicle lead-acid battery, thereby reducing the loss of lead acid and increasing the life of the lead acid.

### DESCRIPTION OF DRAWINGS

To describe technical solutions in embodiments of this application more clearly, the following outlines accompanying drawings used in the embodiments of this application.
FIG. 1 is a schematic structural diagram of a system in which a BMS is powered by a vehicle lead-acid battery according to an embodiment of this application;
FIG. 2 is a schematic structural diagram of a power supply guarantee system according to an embodiment of this application;
FIG. 3 is a detailed schematic structural diagram of a power supply guarantee system according to another embodiment of this application;
FIG. 4 is a detailed schematic structural diagram of a power supply guarantee system according to still another embodiment of this application;
FIG. 5 is a schematic flowchart of a power supply guarantee method according to an embodiment of this application; and
FIG. 6 is a schematic flowchart of a power supply guarantee method according to another embodiment of this application.

### DESCRIPTION OF EMBODIMENTS

The following describes features and exemplary embodiments of each aspect of this application in detail. To make the objectives, technical solutions, and advantages of this application clearer, the following describes this application in further detail with reference to accompanying drawings and embodiments. For a person skilled in the art, this application may be implemented without some of the specific details. The following description of the embodiments is only intended to enable a better understanding of this application by illustrating examples of this application.

It needs to be noted that the relational terms herein such as first and second are used only to differentiate an entity or operation from another entity or operation, but do not require or imply any actual relationship or sequence between the entities or operations. Moreover, the terms "include", "comprise", and any variation thereof are intended to cover such a non-exclusive inclusion that a process, method, object, or device that includes or comprises a series of elements not only includes such elements, but also includes other elements not specified expressly or includes inherent elements of the process, method, object, or device. Unless otherwise specified in the context, reference to a process, method, object, or device that "includes" or "comprises" a specific number of elements does not exclude other equivalent elements existent in the process, method, object, or device.

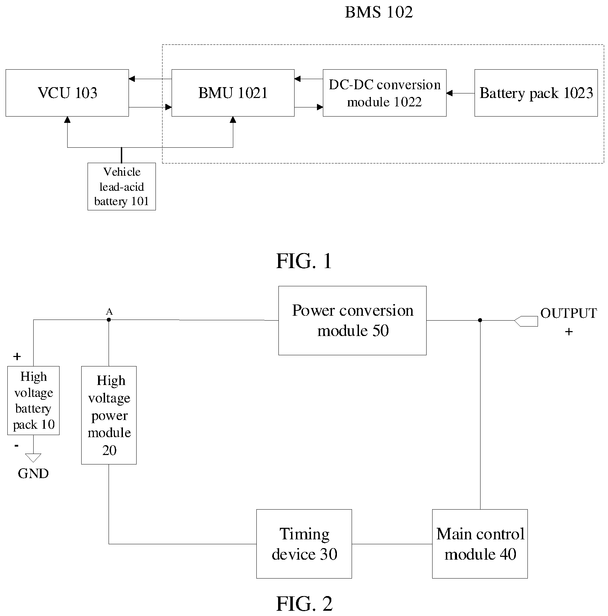

FIG. 1 is a schematic structural diagram of a system in which a BMS is powered by a vehicle lead-acid battery according to an embodiment of this application. As shown in FIG. 1, the vehicle lead-acid battery 101 may power a BMS 102. The BMS 102 may include a battery management unit (BMU) 1021, a DC-DC conversion module 1022, and a battery pack 1023. The DC-DC conversion module 1022 can perform voltage conversion, for example, convert a 24 V system power supply into a 12 V supply to power 12 V-enabled electrical devices in a vehicle.

In a new energy vehicle, the vehicle lead-acid battery 101 may provide a power supply to the BMS 102, and may also be connected to a low voltage control unit through a power supply bus to power the low voltage control unit. The BMS 102 exchanges information with a vehicle control unit (VCU) 103 through a controller area network (CAN) bus, and uploads relevant information such as a state of charge (SOC), voltage, and current of the battery pack 1023 to the VCU.

When an integrated vehicle contains no lead-acid battery and the new energy vehicle is parked for a long time without being used, the VCU and the BMS are powered off. Without being powered by the lead-acid battery, the entire BMS is in a sleep state and unable to monitor the states such as SOC, voltage, and current of the battery pack in the integrated vehicle or to perform corresponding operations.

Therefore, an embodiment of this application provides a power supply guarantee system and a power supply guarantee method to provide a power source to the BMS. When the BMS is in a sleep state, the BMS is periodically woken up to ensure that the BMS is in a powered state, and to facilitate the BMS to collect and store relevant information in the battery pack of the integrated vehicle. With the power supply guarantee system and the power supply guarantee method according to the embodiments of this application, the BMS is woken up without resorting to a vehicle lead-acid battery, thereby reducing the loss of lead acid and increasing the life of the lead acid.

To enable better understanding of this application, the following describes in detail the power supply guarantee system and the power supply guarantee method according to an embodiment of this application with reference to accompanying drawings. It needs to be noted that the embodiments are not intended to limit the scope of the disclosure of this application.

FIG. 2 is a schematic structural diagram of a power supply guarantee system according to an embodiment of this application. As shown in FIG. 2, a power supply guarantee system 200 in this embodiment of this application may include: a high voltage battery pack 10, a high voltage power module 20, a timing device 30, a main control module 40, and a power conversion module 50.

The main control module 40 may be configured to send a received wake-up time to the timing device. The high voltage power module 20 is configured to power the timing device 30 according to electrical energy in the high voltage battery pack 10. The timing device 30 may be configured to set a wake-up clock according to the wake-up time, start timing when the BMS enters sleep, and send a discharge instruction to the high voltage battery pack 10 when the timing reaches the wake-up time. The power conversion module 50 is configured to convert high voltage electrical energy into low voltage electrical energy, and use the low voltage electrical energy to power the BMS, where the high voltage electrical energy is output by the high voltage battery pack 10 according to the discharge instruction.

In an embodiment, the wake-up time received by the timing device is a wake-up time that is set by the VCU. In other words, the VCU (not shown in FIG. 2) may be configured to set a wake-up time, and send the wake-up time to the timing device through the main control module. In this embodiment, the main control module may be, for example, a microprogrammed control unit (microprogrammed control unit, MCU).

With the power supply guarantee system according to this embodiment of this application, when the integrated vehicle contains no lead-acid battery and the BMS enters a sleep mode, the power supply can still be provided to the BMS, so that the BMS is always in a powered state and the entire BMS system keeps operating normally.

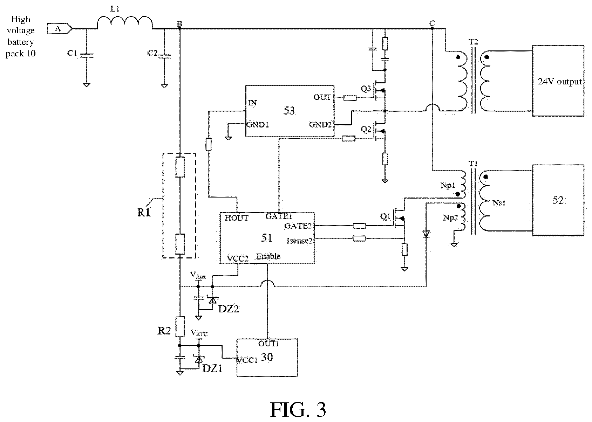

FIG. 3 is a detailed schematic structural diagram of a power supply guarantee system according to another embodiment of this application. The reference numerals used in FIG. 3 to denote structures are the same as the reference numerals used in FIG. 2 for the same or equivalent structures. It needs to be noted that the embodiments are not intended to limit the scope of the disclosure of this application.

As shown in FIG. 3, in a power supply guarantee system 200 in an embodiment, the power conversion module 50 may specifically include: a forward power control module 51, a first high voltage transmission module, a synchronous rectification module 52, a first isolation and driving module 53, and a second high voltage transmission module.

In this embodiment, the timing device 30 is further configured to provide an enable signal to the forward power control module 51 when the timing reaches the wake-up time. The forward power control module 51 starts working under the control of enable signal.

The forward power control module 51 is configured to provide a power supply to the synchronous rectification module 52 through the first high voltage transmission module, and control an on-state of connection between the high voltage battery pack 10 and the second high voltage transmission module through the first isolation and driving module 53.

The second high voltage transmission module is configured to convert high voltage electrical energy in the high voltage battery pack 10 into low voltage electrical energy when the connection between the second high voltage transmission module and the high voltage battery pack 10 is turned on.

The synchronous rectification module 52 is configured to perform synchronous rectification on the low voltage electrical energy, and use the synchronously rectified low voltage electrical energy to power the BMS.

In this embodiment of this application, when the integrated vehicle needs to be powered off, the VCU can set the wake-up time in advance, generate a timed wake-up instruction according to the wake-up time, and deliver the wake-up instruction to the BMS, and then the VCU is powered off. The BMS delivers the timed wake-up instruction to the timing device through the main control module. After a timer sets a time, the entire BMS will enter a sleep state. When the timing of the timing device reaches the wake-up time, the timing device delivers a discharge command to the high voltage battery pack. The power conversion module converts electrical energy in the high voltage battery pack into low voltage electrical energy as a power source to the BMS, so that the BMS is woken up from sleep, and starts to monitor relevant information such as the SOC, voltage, and current in the battery pack of the integrated vehicle and perform corresponding operations.

Still referring to FIG. 3, in an embodiment, the high voltage power module includes a first power access point B, a first voltage divider resistor network R1, a second voltage divider resistor network R2, and a first voltage regulator unit DZ1. The timing device 30 includes a clock power supply end VCC1.

In an embodiment, the first power access point B is located at a positive electrode of the high voltage battery pack 10. One end of the first voltage divider resistor network R1 is connected to the first power access point B. The other end of the first voltage divider resistor network R1 is connected to one end of the second voltage divider resistor network R2. The other end of the second voltage divider resistor network R2 is connected to the clock power supply end VCC1. One end of the first voltage regulator unit DZ1 is connected to the clock power supply end VCC1. The other end of the first voltage regulator unit DZ1 is connected to a reference voltage end.

In an embodiment, the first voltage divider resistor network R1 and the second voltage divider resistor network R2 may each include a plurality of serial-connected resistors, and the first voltage regulator unit DZ1 may include a Zener diode.

In this embodiment, the first power access point B provides a constant power supply VRTC to the timing device through the first voltage divider resistor network R1 and the second voltage divider resistor network R2. The first voltage regulator unit DZ1 regulates the constant power supply so that the clock power supply end VCC1 of the timing device 30 obtains a stable working voltage.

Still referring to FIG. 3, the power conversion module includes a resonant filter module. An input end of the resonant filter module is connected to the high voltage battery pack, and an output end of the resonant filter module is connected to the high voltage power module.

In an embodiment, the resonant filter module includes a first capacitor network C1, a second capacitor network C2, and a first inductor network L1.

One end of the first capacitor network C1 is connected to the high voltage battery pack 10. The other end of the first capacitor network C1 is connected to a reference voltage end. One end of the first inductor network L1 is connected to the high voltage battery pack 10. The other end of the first inductor network L1 is connected to one end of the second capacitor network C2. The other end of the second capacitor network C2 is connected to the reference voltage end.

In this embodiment, through series resonance of a capacitor and an inductor, the resonant filter module filters out a harmonic current whose frequency is identical or similar to this resonant frequency in the circuit. This prevents a large quantity of harmonics from flowing into the capacitor and causing damage to the capacitor, and enhances safety of the power supply guarantee system.

As shown in FIG. 3, in an embodiment, the timing device 30 may include a real-time clock (RTC), a clock power supply end VCC1, a clock input end IN1, and a clock output end OUT 1.

The timing device 30 is further configured to receive the wake-up time through the clock input end IN1, and set the RTC according to the wake-up time, cause the RTC to start timing when the BMS enters sleep, and output an enable signal through the clock output end OUT1 when the timing reaches the wake-up time.

In an embodiment, the high voltage power module 20 includes a first power access point B, a first voltage divider resistor network R1, and a second voltage regulator unit DZ2. The forward power control module 51 includes an enable end and a forward power supply end VCC2.

The first power access point B is located at a positive electrode of the high voltage battery pack 10. One end of the first voltage divider resistor network R1 is connected to the first power access point B. The other end of the first voltage divider resistor network R1 is connected to the forward power supply end VCC2.

In addition, the high voltage power module 20 is further configured to use electrical energy in the high voltage battery pack 10 to provide a working voltage to the forward power control module 51 through the first power access point B and the second voltage divider resistor network R2.

The forward power control module 51 is further configured to receive the enable signal through the enable end, and use the enable signal to cause the forward power control module 51 to start working.

In this embodiment, the first power access point B provides a constant power supply VAUX to the forward power control module 51 through the first voltage divider resistor network R1. The second voltage regulator unit DZ2 regulates the constant power supply so that the forward power supply end VCC2 of the forward power control module 51 obtains a stable starting voltage.

In this embodiment, the second voltage divider resistor network R2 serves a function of voltage division. Through adjustment of a resistance of the second voltage divider resistor network R2, a variation range of the working voltage of the forward power control module can be adjusted, so that the forward power control module obtains a stable working voltage.

In the power supply guarantee system shown in FIG. 3, the first voltage divider resistor network R1 and the second voltage divider resistor network R2 each include one resistor. In other embodiments, the first voltage divider resistor network R1 and the second voltage divider resistor network R2 may each include two or more resistors connected in series and/or in parallel.

It needs to be noted that the combination form and the resistance value of the first voltage divider resistor network R1, and the combination form and the resistance value of the second voltage divider resistor network R2, may be set according to actual situations in actual application scenarios of the power supply guarantee system.

As shown in FIG. 3, in an embodiment, the first high voltage transmission module includes a first switch device Q1 and a first transformer T1, and the forward power control module 51 includes a first control signal output port GATE2. The forward power control module 51 is further configured to control an on/off state of the first switch device Q1 through the first control signal output port GATE2.

When the first switch device Q1 is turned on, a first part Np1 of a primary side coil of the first transformer T1 stores energy. When the first switch device Q1 is turned off, the energy stored in the first part Np1 of the primary side coil is coupled to a second part Np2 of the primary side coil and a secondary side coil Ns1 of the first transformer T1.

When the first switch device Q1 is turned off, a power supply is provided to the synchronous rectification module 52 by using the electrical energy coupled to the secondary side coil Ns1 of the first transformer T1, and electrical energy is provided to the forward power control module 51 by using the electrical energy coupled to the second part Np2 of the primary side coil of the first transformer.

Still referring to FIG. 3, the power conversion module 50 further includes a first rectification and filtering unit. The first rectification and filtering unit is connected to the synchronous rectification power supply end VCC3 of the synchronous rectification module 52.

The first rectification and filtering unit is configured to perform rectification and filtering on the electrical energy coupled to the secondary side coil Ns1 of the first transformer T1, and input the rectified and filtered electrical energy into the synchronous rectification power supply end VCC3.

In this embodiment of this application, when the RTC of the timing device 30 reaches the set time (that is, reaches the wake-up time), the clock output end OUT1 of the timing device 30 enables the forward power control module 51 such as an enable pin of a forward control chip. In this case, the first transformer T1 starts to work, and outputs electrical energy at a high voltage side to power the forward power control module 51 at the same time.

As shown in FIG. 3, in an embodiment, the forward power control module 51 includes a second control signal output port GATE1 and a third control signal output port HOUT. The first isolation and driving module 53 includes a first isolation input end IN2 and a first drive signal output port OUT4. The second high voltage transmission module includes a second switch device Q2 and a third switch device Q3.

The forward power control module 51 is further configured to control an on-state of the second switch device Q2 through a second control signal output by the second control signal output port GATE1, output a third control signal through the third control signal output port HOUT, and transmit the third control signal to the first isolation input end IN2.

The first isolation and driving module 53 is configured to output a first drive signal through the first drive signal output port OUT4 according to the second control signal received by the first isolation input end IN2, so as to control an on-state of the third switch device Q3.

The forward power control module 51 is further configured to control the connection between the high voltage battery pack and the second high voltage transmission module to turn on when the second switch device Q2 is turned on and the third switch device Q3 is turned on.

In this embodiment, the high voltage electrical energy in the high voltage battery pack is transmitted to the low voltage side of the second transformer T2 through the second switch device Q2 and the third switch device Q3 that are turned on, and the second transformer T2 outputs low voltage electrical energy.

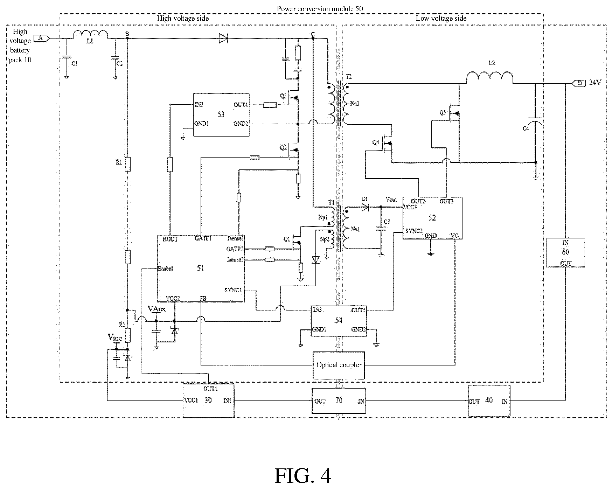

FIG. 4 is a detailed schematic structural diagram of a power supply guarantee system according to another embodiment of this application. The reference numerals used in FIG. 4 to denote structures are the same as the reference numerals used in FIG. 3 for the same or equivalent structures. It needs to be noted that the embodiments are not intended to limit the scope of the disclosure of this application.

As shown in FIG. 4, in an embodiment, the first rectification and filtering unit includes a first diode network D1 and a third capacitor network C3. An input end of the first diode network D1 is connected to a homonymous end of the secondary side coil Ns 1 of the first transformer T1. An output end of the first diode network D 1 is connected to one end of the third capacitor network C3. The other end of the third capacitor network C3 is connected to a reference voltage end. A heteronymous end of the secondary side coil Ns1 of the first transformer T1 is connected to the reference voltage end.

In the power supply guarantee system shown in FIG. 3, the first diode network serves a function of rectification, and improves a current passing capacity. The third capacitor network serves a function of filtering.

In an embodiment, the first rectifier diode network D1 may include a single diode device, and the third capacitor network C3 may include a single capacitor. In other embodiments, the first rectifier diode network D1 may also include two or more diodes connected in series and/or in parallel, and the third capacitor network C3 may also include two or more capacitors connected in series and/or in parallel.

It needs to be noted that the combination form of the first diode network D1 and the combination form of the third capacitor network C3 may be set according to actual situations in actual application scenarios of power supply guarantee.

In an embodiment, the power conversion module includes a second rectification and filtering unit. The second rectification and filtering unit is connected to an output end of the second high voltage transmission module.

The second rectification and filtering unit is configured to perform rectification and filtering on the synchronously rectified low voltage electrical energy, and transmit the rectified and filtered low voltage electrical energy to the BMS.

In an embodiment, the second rectification and filtering unit may include a second inductor network L2 and a fourth capacitor network C4.

One end of the second inductor network L2 is connected to the homonymous end of the secondary side coil Ns2 of the second transformer T2. The other end of the second inductor network L2 is connected to one end of the fourth capacitor network C4. The other end of the fourth capacitor network C4 is connected to the reference voltage end.

In the power supply guarantee system shown in FIG. 4, the second inductor network L2 serves functions of isolating alternating current signals and filtering, and the fourth capacitor network C4 serves functions of filtering and voltage regulation.

In an embodiment, the second inductor network L2 may include a single inductor, and the fourth capacitor network C4 may include a single capacitor. In other embodiments, the second inductor network L2 may also include two or more inductors connected in series and/or in parallel, and the fourth capacitor network C4 may also include two or more capacitors connected in parallel.

It needs to be noted that the combination form and the resistance value of the second inductor network L2, and the combination form and the resistance value of the fourth capacitor network C4, may be set according to actual situations in actual application scenarios of power supply guarantee.

As shown in FIG. 4, in an embodiment, the power supply guarantee system further includes a low-dropout linear regulator module 60 and a first isolation device 70.

The low-dropout linear regulator module 60 is configured to perform voltage step-down on the low voltage electrical energy to obtain stepped-down electrical energy. The main control module 40 is further configured to start working according to the stepped-down electrical energy, and send the wake-up time to the timing device 30 through the first isolation device 70.

In this embodiment, the stepped-down electrical energy provides a working voltage to the main control module so that the main control module starts working. The first isolation device serves a function of electrical isolation. The electrical isolation avoids or reduces direct connection between the main control module at the low voltage side and the timing device at the high voltage side, thereby reducing electrical interference and improving safety of the power supply guarantee system.

As shown in FIG. 4, in an embodiment, the power conversion module further includes a second isolation device 54. The second isolation device 54 is configured to electrically isolate a frequency synchronization signal output by the forward power control module 51, and transmit the electrically isolated frequency synchronization signal to the synchronous rectification module 52.

As shown in FIG. 4, in an embodiment, the synchronous rectification module 52 includes a synchronous rectification power supply end VCC3, a first synchronous rectification output port OUT2, and a second synchronous rectification output port OUT3. The second high voltage transmission module includes a second transformer T2, a fourth switch device Q4, and a fifth switch device Q5.

The first synchronous rectification output port OUT2 is connected to a control end of the fourth switch device. A first load access end of the fourth switch device Q4 is connected to a heteronymous end of a secondary side coil Ns2 of the second transformer T2. A second load access end of the fourth switch device Q4 is connected to a reference voltage end.

The second synchronous rectification output port OUT3 is connected to a control end of the fifth switch device Q5. A first load access end of the fifth switch device Q5 is connected to a homonymous end of the secondary side coil Ns2 of the second transformer T2. A second load access end of the fifth switch device Q5 is connected to the reference voltage end.

The synchronous rectification module 52 is further configured to receive the electrically isolated frequency synchronization signal output by the second isolation device 54, synchronously control the fourth switch device Q4 and the fifth switch device Q5 to turn on according to the frequency synchronization signal, and transmit low voltage electrical energy to the BMS through the fourth switch device Q4 and the fifth switch device Q5 that are turned on.

In an embodiment, a first frequency synchronization interface SYNC1 of the forward power control module 51 is connected to the second isolation input end IN3 of the second isolation device 54. A second drive signal output port OUTS of the second isolation device 54 is connected to a second frequency synchronization interface SYNC2 of a synchronous rectification chip.

In this embodiment, the second isolation device 54 transmits the frequency synchronization signal output by the forward power supply control module, to the synchronous rectification module to achieve signal frequency synchronization between the forward power control module and the synchronous rectification module.

With the power supply guarantee system according to this embodiment of this application, the VCU delivers a timed wake-up instruction to the BMS, and is then powered off. After receiving the timed wake-up instruction, the BMS transmits the timed wake-up instruction to the timing device through the main control module. The timing device sets a wake-up time according to the timed wake-up instruction, and then the entire BMS enters a sleep state. When the timing of the timing device reaches the wake-up time, the timing device delivers a discharge command to the high voltage battery pack. The power conversion module converts electrical energy in the high voltage battery pack into low voltage electrical energy for powering the BMS, thereby ensuring normal operation of the BMS.

In the power supply guarantee system according to this embodiment of this application, the high voltage battery pack outputs a stable 24 V power supply to the low voltage side. The power supply is converted by the low-dropout linear regulator module as a power supply to the main control module. In this way, the low-dropout linear regulator module works normally, the main control module works normally, and the power conversion module works normally, so that the entire BMS works normally. Subsequently, the BMS monitors relevant data in the battery, stores the data, and performs corresponding operations. After the foregoing work is completed, if the VCU is not working, the BMS delivers the timed wake-up instruction to the timer and then enters a sleep state again to wait for next timed wake-up.

With the power supply guarantee system according to this embodiment of this application, if the integrated vehicle contains no lead-acid battery, when the BMS is in the sleep state, the BMS is woken up by the timing device, and a stable power source is provided to the BMS. This ensures that the BMS is in a powered state, facilitates the BMS to collect and store the relevant information in the battery pack of the integrated vehicle, and enables the BMS to monitor the integrated vehicle in real time. The power supply guarantee system according to this embodiment of this application wakes up the BMS through the timing device, without resorting to the vehicle lead-acid battery, thereby reducing the loss of lead acid and increasing the life of the lead acid.

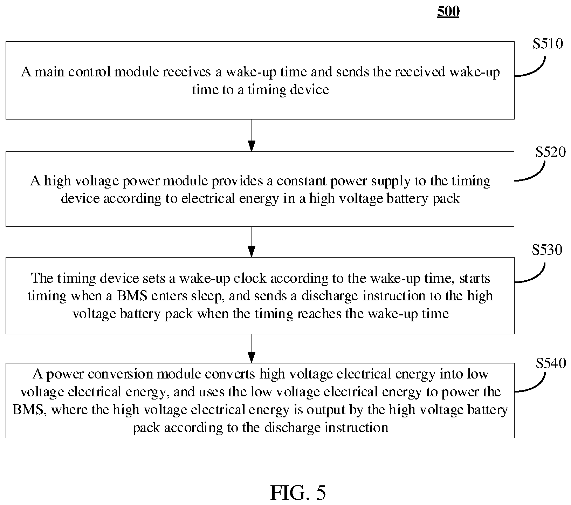

FIG. 5 is a flowchart of a power supply guarantee method according to an embodiment of this application. The power supply guarantee method exemplified in this application is applicable to the power supply guarantee system described in the foregoing embodiments with reference to FIG. 1 to FIG. 4. As shown in FIG. 5, the power supply guarantee method 500 according to an embodiment of this application includes the following steps.

Step S510: A main control module receives a wake-up time and sends the received wake-up time to a timing device.

Step S520: A high voltage power module provides a constant power supply to the timing device according to electrical energy in a high voltage battery pack.

Step S530: The timing device sets a wake-up clock according to the wake-up time, starts timing when a BMS enters sleep, and sends a discharge instruction to the high voltage battery pack when the timing of the timing device reaches the wake-up time.

Step S540: A power conversion module converts high voltage electrical energy into low voltage electrical energy, and uses the low voltage electrical energy to power the BMS, where the high voltage electrical energy is output by the high voltage battery pack according to the discharge instruction.

In an embodiment, the wake-up time received by the main control module is a wake-up time that is set by the VCU. In this embodiment, the main control module may be used to receive the set wake-up time, and send the wake-up time to the timing device.

In an embodiment, the power supply guarantee method may further include the following step:
Step S550: Power off the VCU after the wake-up time is set by the VCU, and power off the BMS after the wake-up time is sent to the timing device by the main control module.

In an embodiment, the power supply guarantee method may further include the following step:
Step S560: The VCU provides a working voltage to the high voltage battery pack when the timing of the timing device does not reach the wake-up time and the VCU is in a working state, so that the high voltage battery pack starts working.

In an embodiment, the power supply guarantee method may further include the following step:
Step S570: The timing device resets the wake-up clock according to the wake-up time when the timing of the timing device reaches the wake-up time and the VCU is in a sleep state.

In this embodiment of this application, when the VCU starts working during a period of timing by the timer, the BMS wakes up from the sleep state. If the VCU is not working, the timer continues timing. Once the BMS is woken up from sleep, if the VCU is still not working, the BMS will transmit the timed wake-up instruction to the timer and then enter the sleep state to wait for the next timed wake-up. Once the VCU is found to start working, the sleep state prior to wake-up will end.

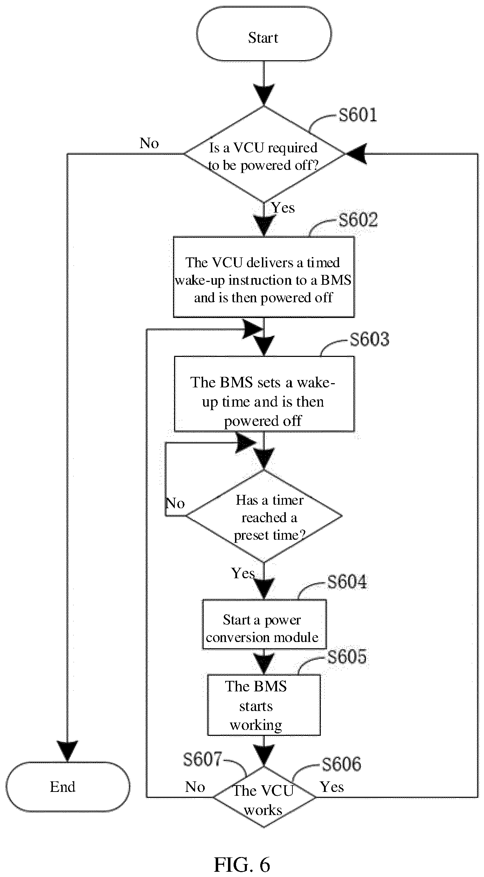

FIG. 6 is a schematic flowchart of a power supply guarantee method according to another embodiment of this application. As shown in FIG. 6, in an embodiment, the power supply guarantee method may include the following steps.

As shown in step S601, when working normally, the VCU determines whether the VCU needs to be powered off.

As shown in step S602, if the VCU needs to be powered off, the VCU is powered off after delivering a timed wake-up instruction to the BMS. If the VCU does not need to be powered off, the VCU works normally, and the power supply guarantee method process is ended.

As shown in step S603, the BMS transmits the timed wake-up instruction to the timing device. The timing device sets a wake-up clock according to the wake-up time, and the BMS is powered off and is in a sleep state.

As shown in step S604, when the timing of the timing device reaches a preset wake-up time, the power conversion module is activated by the timing device to start working.

In this step, the step of the timing device activating the power conversion module to start working may specifically include: when the timing of the timer reaches the preset wake-up time, an enable signal is sent to the forward power control module; under the control of the enable signal, the forward power control module starts working; the forward power control module controls an on/off state of the switch device Q1, and controls storage and discharge of electrical energy in a primary side winding Np 1 of the transformer T1 by turning on and turning off the switch device Q1; the forward power control module also controls the on/off state of the switch device Q2 and the switch device Q3; when the switch device Q3 is turned on, the transformer T2 converts high voltage electrical energy into low voltage electrical energy, where the high voltage electrical energy is output by the high voltage battery pack.

As shown in step S605, the high voltage electrical energy of the high voltage battery pack is converted into stable low voltage electrical energy by the power conversion module, and the BMS works normally.

As shown in step S606, it is determined whether the VCU is working normally. If the VCU is working normally, the BMS will not enter the sleep state any longer after completing the normal work.

As shown in step S607, if the VCU is not working normally, that is, if the VCU is still in the sleep state, the timing device resets a wake-up clock according to the wake-up time after the BMS completes normal work, and the BMS is powered off again and is in a sleep state.

In the power supply guarantee method according to this embodiment of this application, when the BMS is in the sleep state, the BMS is woken up by the timing device, and a stable power source is provided to the BMS by using the high voltage battery pack. This ensures that the BMS is in a powered state, and enables the BMS to monitor the integrated vehicle in real time.

Evidently, this application is not limited to the specific configuration and processing described in the foregoing embodiments and shown in the drawings. For convenience and brevity of description, detailed descriptions of known methods are omitted herein. The corresponding processes in the method embodiments described above can be learned by referring to the specific working processes of the systems, modules, and units described earlier herein, and are not repeated here again.

According to the embodiments of this application, the processes described above with reference to the flowchart may be implemented in the form of a computer software program. For example, an embodiment of this application includes a computer program product. The computer program product includes a computer program tangibly contained in a machine-readable medium. The computer program includes program code for executing the method shown in the flowchart. In such an embodiment, the computer program may be downloaded and installed from the Internet, and/or installed from a detachable storage medium.

The foregoing embodiments may be implemented fully or partially by software, hardware, firmware, or any combination thereof. When implemented by software, the embodiment may be fully or partially implemented in the form of a computer program product. The computer program product includes one or more computer instructions. When being run on a computer, the computer instructions cause the computer to execute the method described in each embodiment described above. When the computer program instructions are loaded and executed on the computer, the processes or functions described in the embodiments of this application are generated in full or in part. The computer may be a general-purpose computer, a dedicated computer, a computer network, or other programmable devices. The computer instructions may be stored in a computer-readable storage medium or transmitted from one computer-readable storage medium to another. For example, the computer instructions may be transmitted from a website, computer, server, or data center to another website, computer, server, or data center in a wired (such as a coaxial cable, optical fiber, or digital subscriber line (DSL)) or wireless (such as infrared, radio, or microwave) manner. The computer-readable storage medium may be any available medium accessible to a computer, or a data storage device such as a server or data center that integrates one or more available medium(s). The available medium may be a magnetic medium (such as a floppy disk, a hard disk, or a magnetic tape), an optical medium (such as a DVD), or a semiconductor medium (such as a solid state disk).

The described apparatus embodiments are merely exemplary. The units described as separate parts may or may not be physically separate, and parts displayed as units may or may not be physical units, may be located in one position, and may be distributed on a plurality of network elements. A part of or all of the modules may be selected according to the actual needs to achieve the objectives of the solutions of the embodiments. A person of ordinary skill in the art can understand and implement the solutions without making any creative efforts.

## Claims

1. A power supply guarantee system, applied to a battery management system (102), **characterized in that** the power supply guarantee system comprises: a main control module (40), a high voltage battery pack (10), a high voltage power module (20), a timing device (30), and a power conversion module (50), wherein
the main control module (40) is configured to send a received wake-up time to the timing device (30);
the high voltage power module (20) is configured to power the timing device (30) according to electrical energy in the high voltage battery pack (10);
the timing device (30) is configured to set a wake-up clock according to the wake-up time, start timing when the battery management system (102) enters sleep, and send a discharge instruction to the high voltage battery pack (10) when the timing reaches the wake-up time; and
the power conversion module (50) is configured to convert high voltage electrical energy into low voltage electrical energy, and use the low voltage electrical energy to power the battery management system (102), wherein the high voltage electrical energy is output by the high voltage battery pack (10) according to the discharge instruction,
wherein the power conversion module (50) comprises: a forward power control module (51), a first high voltage transmission module, a synchronous rectification module (52), a first isolation and driving module (53), and a second high voltage transmission module, wherein the first high voltage transmission module and the second high voltage transmission module are not the same module, wherein
the timing device (30) is further configured to provide an enable signal to the forward power control module (51) when the timing reaches the wake-up time, so that the forward power control module (51) starts working under the control of the enable signal;
the forward power control module (51) is configured to provide a power supply to the synchronous rectification module (52) through the first high voltage transmission module; and
the second high voltage transmission module is configured to convert high voltage electrical energy in the high voltage battery pack (10) into low voltage electrical energy when the connection between the second high voltage transmission module and the high voltage battery pack (10) is turned on; and
the synchronous rectification module (52) is configured to perform synchronous rectification on the low voltage electrical energy, and use the synchronously rectified low voltage electrical energy to power the battery management system (102), **characterized in that** the forward power control module (51) is configured to control an on-state of connection between the high voltage battery pack (10) and the second high voltage transmission module through the first isolation and driving module (53).

2. The power supply guarantee system according to claim 1, wherein the high voltage power module (20) comprises a first power access point (B), a first voltage divider resistor network (R1), a second voltage divider resistor network (R2), and a first voltage regulator unit (DZ1), and the timing device (30) comprises a clock power supply end (VCC1), wherein
the first power access point (B) is located at a positive electrode of the high voltage battery pack (10), one end of the first voltage divider resistor network (R1) is connected to the first power access point (B), the other end of the first voltage divider resistor network (R1) is connected to one end of the second voltage divider resistor network (R2), the other end of the second voltage divider resistor network (R2) is connected to the clock power supply end (VCC1), one end of the first voltage regulator unit (DZ1) is connected to the clock power supply end (VCC1), and the other end of the first voltage regulator unit (DZ1) is connected to a reference voltage end.

3. The power supply guarantee system according to claim 1, wherein the power conversion module (50) comprises a resonant filter module, an input end of the resonant filter module is connected to the high voltage battery pack (10), and an output end of the resonant filter module is connected to the high voltage power module (20).

4. The power supply guarantee system according to claim 3, wherein the resonant filter module comprises a first capacitor network (C1), a second capacitor network (C2), and a first inductor network (L1);
one end of the first capacitor network (C1) is connected to the high voltage battery pack (10), the other end of the first capacitor network (C1) is connected to a reference voltage end, one end of the first inductor network (L1) is connected to the high voltage battery pack (10), the other end of the first inductor network (L1) is connected to one end of the second capacitor network (C2), and the other end of the second capacitor network (C2) is connected to the reference voltage end.

5. The power supply guarantee system according to claim 1, wherein the timing device (30) comprises a real-time clock, a clock power supply end (VCC1), a clock input end (IN1), and a clock output end (OUT1), wherein
the timing device (30) is further configured to receive the wake-up time through the clock input end (IN1), and set the real-time clock according to the wake-up time; and
the real-time clock starts timing when the battery management system (102) enters sleep, and outputs and provides an enable signal through the clock output end (OUT1) when the timing reaches the wake-up time.

6. The power supply guarantee system according to claim 1, wherein the high voltage power module (20) comprises a first power access point (B), a first voltage divider resistor network (R1), and a second voltage regulator unit (DZ2), and the forward power control module (51) comprises an enable end (Enable) and a forward power supply end (VCC2), wherein
the first power access point (B) is located at a positive electrode of the high voltage battery pack (10), one end of the first voltage divider resistor network (R1) is connected to the first power access point (B), and the other end of the first voltage divider resistor network (R1) is connected to the forward power supply end (VCC2);
the high voltage power module (20) is further configured to use electrical energy in the high voltage battery pack (10) to provide a working voltage to the forward power control module (51) through the first power access point (B), the first voltage divider resistor network (R1), and the second voltage regulator unit (DZ2); and
the forward power control module (51) is further configured to receive the enable signal through the enable end (Enable), and use the enable signal to cause the forward power control module (51) to start working.

7. The power supply guarantee system according to claim 1, wherein the first high voltage transmission module comprises a first switch device (Q1) and a first transformer (T1), and the forward power control module (51) comprises a first control signal output port (GATE2), wherein
the forward power control module (51) is further configured to: control an on/off state of the first switch device (Q1) through the first control signal output port (GATE2);
when the first switch device (Q1) is turned on, store energy through a first part (Np1) of a primary side coil of the first transformer (T1); when the first switch device (Q1) is turned off, couple the energy stored in the first part (Np1) of the primary side coil to a second part (Np2) of the primary side coil and a secondary side coil (Ns1) of the first transformer (T1);
when the first switch device (Q1) is turned off, provide a power supply to the synchronous rectification module (52) by using the electrical energy coupled to the secondary side coil (Ns1) of the first transformer (T1); and
provide electrical energy to the forward power control module (51) by using the electrical energy coupled to the second part (Np2) of the primary side coil of the first transformer (T1).

8. The power supply guarantee system according to claim7, wherein the power conversion module (50) further comprises a first rectification and filtering unit, and the first rectification and filtering unit is connected to a synchronous rectification power supply end (VCC3) of the synchronous rectification module (52), wherein
the first rectification and filtering unit is configured to perform rectification and filtering on the electrical energy coupled to the secondary side coil (Ns1) of the first transformer (T1), and input the rectified and filtered electrical energy into the synchronous rectification power supply end (VCC3).

9. The power supply guarantee system according to claim 8, wherein the first rectification and filtering unit comprises a first diode network (D1) and a third capacitor network (C3), wherein
an input end of the first diode network (D1) is connected to a homonymous end of the secondary side coil (Ns1) of the first transformer (T1), an output end of the first diode network (D1) is connected to one end of the third capacitor network (C3), the other end of the third capacitor network (C3) is connected to a reference voltage end, and a heteronymous end of the secondary side coil (Ns1) of the first transformer (T1) is connected to the reference voltage end.

10. The power supply guarantee system according to claim 1, wherein the forward power control module (51) comprises a second control signal output port (GATE1) and a third control signal output port (HOUT), the first isolation and driving module (53) comprises a first isolation input end (IN2) and a first drive signal output port (OUT4), and the second high voltage transmission module comprises a second switch device (Q2) and a third switch device (Q3), wherein
the forward power control module (51) is further configured to control an on-state of the second switch device (Q2) through a second control signal output by the second control signal output port (GATE1), output a third control signal through the third control signal output port (HOUT), and transmit the third control signal to the first isolation input end (IN2);
the first isolation and driving module (53) is configured to output a first drive signal through the first drive signal output port (OUT4) according to the second control signal received by the first isolation input end (IN2), so as to control an on-state of the third switch device (Q3); and
the forward power control module (51) is further configured to control the connection between the high voltage battery pack (10) and the second high voltage transmission module to turn on when the second switch device (Q2) is turned on and the third switch device (Q3) is turned on.

11. The power supply guarantee system according to claim 1, wherein the synchronous rectification module (52) comprises a synchronous rectification power supply end (VCC3), a first synchronous rectification output port (OUT2), and a second synchronous rectification output port (OUT3), and the second high voltage transmission module comprises a second transformer (T2), a fourth switch device (Q4), and a fifth switch device (Q5), wherein
the first synchronous rectification output port (OUT2) is connected to a control end of the fourth switch device (Q4), a first load access end of the fourth switch device (Q4) is connected to a heteronymous end of a secondary side coil (Ns2) of the second transformer (T2), and a second load access end of the fourth switch device (Q4) is connected to a reference voltage end;
the second synchronous rectification output port (OUT3) is connected to a control end of the fifth switch device (Q5), a first load access end of the fifth switch device (Q5) is connected to a homonymous end of the secondary side coil (Ns2) of the second transformer (T2), and a second load access end of the fifth switch device (Q5) is connected to the reference voltage end; and
the synchronous rectification module (52) is further configured to: detect low voltage electrical energy output by the second high voltage transmission module; when the low voltage electrical energy meets a low voltage threshold condition, control the fourth switch device (Q4) and the fifth switch device (Q5) to turn on; and transmit the low voltage electrical energy to the battery management system (102) through the fourth switch device (Q4) and the fifth switch device (Q5) that are turned on.

12. The power supply guarantee system according to claim 1, wherein the power conversion module (50) comprises a second rectification and filtering unit, and the second rectification and filtering unit is connected to an output end of the second high voltage transmission module, wherein
the second rectification and filtering unit is configured to perform rectification and filtering on the synchronously rectified low voltage electrical energy, and transmit the rectified and filtered low voltage electrical energy to the battery management system (102).

13. The power supply guarantee system according to claim 11, wherein the power supply guarantee system further comprises a second rectification and filtering unit, and the second rectification and filtering unit comprises a second inductor network (L2) and a fourth capacitor network (C4);
one end of the second inductor network (L2) is connected to the homonymous end of the secondary side coil (Ns2) of the second transformer (T2), the other end of the second inductor network (L2) is connected to one end of the fourth capacitor network (C4), and the other end of the fourth capacitor network (C4) is connected to the reference voltage end.

14. A power supply guarantee method (500), applicable to the power supply guarantee system according to any of claims 1 to 13, **characterized in that** the power supply guarantee method comprises:
receiving, by a main control module (40), a wake-up time and sending the received wake-up time to a timing device (30) (S510);
providing, by a high voltage power module (20), a constant power supply to the timing device (30) according to electrical energy in a high voltage battery pack (10) (S520);
setting, by the timing device (30), a wake-up clock according to the wake-up time, starting timing when a battery management system (102) enters sleep, and sending a discharge instruction to the high voltage battery pack (10) when the timing of the timing device (30) reaches the wake-up time (S530); and
converting, by a power conversion module (50), high voltage electrical energy into low voltage electrical energy, and using the low voltage electrical energy to power the battery management system (102), wherein the high voltage electrical energy is output by the high voltage battery pack (10) according to the discharge instruction (S540);
wherein the power conversion module (50) comprises: a forward power control module (51), a first high voltage transmission module, a synchronous rectification module (52), a first isolation and driving module (53), and a second high voltage transmission module, wherein the first high voltage transmission module and the second high voltage transmission module are not the same module,
wherein the method further comprises:
providing, by the timing device (30), an enable signal to the forward power control module (51) when the timing reaches the wake-up time, so that the forward power control module (51) starts working under the control of the enable signal;
providing, by the forward power control module (51), a power supply to the synchronous rectification module (52) through the first high voltage transmission module;
converting, by the second high voltage transmission module, high voltage electrical energy in the high voltage battery pack (10) into low voltage electrical energy when the connection between the second high voltage transmission module and the high voltage battery pack (10) is turned on; and
performing, by the synchronous rectification module (52), synchronous rectification on the low voltage electrical energy, and using, by the synchronous rectification module (52), the synchronously rectified low voltage electrical energy to power the battery management system (102),
**characterized in** controlling, by the forward power control module (51), an on-state of connection between the high voltage battery pack (10) and the second high voltage transmission module through the first isolation and driving module (53).

## Patentansprüche

1. Stromversorgungsgarantiesystem, das auf ein Batteriemanagementsystem (102) angewendet wird, **dadurch gekennzeichnet, dass** das Stromversorgungsgarantiesystem Folgendes umfasst: ein Hauptsteuermodul (40), ein Hochspannungsbatteriepaket (10), ein Hochspannungsleistungsmodul (20), eine Zeitmessvorrichtung (30) und ein Leistungsumwandlungsmodul (50),
das Hauptsteuermodul (40) dazu konfiguriert ist, eine empfangene Aufwachzeit an die Zeitmessvorrichtung (30) zu senden;
das Hochspannungsleistungsmodul (20) dazu konfiguriert ist, die Zeitmessvorrichtung (30) entsprechend der elektrischen Energie in dem Hochspannungsbatteriepaket (10) zu versorgen;
die Zeitmessvorrichtung (30) dazu konfiguriert ist, eine Aufwachuhr gemäß der Aufwachzeit einzustellen, die Zeitmessung zu starten, wenn das Batteriemanagementsystem (102) in den Ruhezustand übergeht, und eine Entladeanweisung an das Hochspannungsbatteriepaket (10) zu senden, wenn die Zeitmessung die Aufwachzeit erreicht; und
das Leistungsumwandlungsmodul (50) dazu konfiguriert ist, elektrische Hochspannungsenergie in elektrische Niederspannungsenergie umzuwandeln und die elektrische Niederspannungsenergie zu verwenden, um das Batteriemanagementsystem (102) mit Energie zu versorgen, wobei die elektrische Hochspannungsenergie durch das Hochspannungsbatteriepaket (10) gemäß der Entladeanweisung ausgegeben wird,
wobei das Leistungsumwandlungsmodul (50) umfasst: ein Vorwärtsleistungssteuermodul (51), ein erstes Hochspannungsübertragungsmodul, ein Synchrongleichrichtungsmodul (52), ein erstes Isolations- und Antriebsmodul (53) und ein zweites Hochspannungsübertragungsmodul, wobei das erste Hochspannungsübertragungsmodul und das zweite Hochspannungsübertragungsmodul nicht dasselbe Modul sind, wobei,
die Zeitmessvorrichtung (30) ferner dazu konfiguriert ist, ein Aktivierungssignal für das Vorwärtsleistungssteuermodul (51) bereitzustellen, wenn die Zeitmessung die Aufwachzeit erreicht, so dass das Vorwärtsleistungssteuermodul (51) unter der Steuerung des Aktivierungssignals zu arbeiten beginnt;
das Vorwärtsleistungssteuermodul (51) dazu konfiguriert ist, eine Stromversorgung für das Synchrongleichrichtungsmodul (52) durch das erste Hochspannungsübertragungsmodul bereitzustellen; und
das zweite Hochspannungsübertragungsmodul dazu konfiguriert ist, elektrische Hochspannungsenergie in dem Hochspannungsbatteriepaket (10) in elektrische Niederspannungsenergie umzuwandeln, wenn die Verbindung zwischen dem zweiten Hochspannungsübertragungsmodul und dem Hochspannungsbatteriepaket (10) eingeschaltet wird; und
das Synchrongleichrichtungsmodul (52) dazu konfiguriert ist, eine synchrone Gleichrichtung der elektrischen Niederspannungsenergie durchzuführen und die synchron gleichgerichtete elektrische Niederspannungsenergie zu verwenden, um das Batteriemanagementsystem (102) zu versorgen,
**dadurch gekennzeichnet, dass** das Vorwärtsleistungssteuermodul (51) dazu konfiguriert ist, einen Einschaltzustand der Verbindung zwischen dem Hochspannungsbatteriepaket (10) und dem zweiten Hochspannungsübertragungsmodul durch das erste Isolations- und Antriebsmodul (53) zu steuern.

2. Stromversorgungsgarantiesystem nach Anspruch 1, wobei das Hochspannungsstrommodul (20) einen ersten Stromzugangspunkt (B), ein erstes Spannungsteiler-Widerstandsnetzwerk (R1), ein zweites Spannungsteiler-Widerstandsnetzwerk (R2) und eine erste Spannungsregeleinheit (DZ1) umfasst, und die Zeitmessvorrichtung (30) ein Uhrstromversorgungsende (VCC1) umfasst, wobei
der erste Leistungszugangspunkt (B) an einer positiven Elektrode des Hochspannungsbatteriepakets (10) angeordnet ist, ein Ende des ersten Spannungsteiler-Widerstandsnetzwerks (R1) mit dem ersten Leistungszugangspunkt (B) verbunden ist, das andere Ende des ersten Spannungsteiler-Widerstandsnetzwerks (R1) mit einem Ende des zweiten Spannungsteiler-Widerstandsnetzwerks (R2) verbunden ist, das andere Ende des zweiten Spannungsteiler-Widerstandsnetzwerks (R2) mit dem Uhrstromversorgungsende (VCC1) verbunden ist, ein Ende der ersten Spannungsregeleinheit (DZ1) mit dem Uhrstromversorgungsende (VCC1) verbunden ist, und das andere Ende der ersten Spannungsregeleinheit (DZ1) mit einem Referenzspannungsende verbunden ist.

3. Stromversorgungsgarantiesystem nach Anspruch 1, wobei das Leistungsumwandlungsmodul (50) ein Resonanzfiltermodul umfasst, ein Eingangsende des Resonanzfiltermoduls mit dem Hochspannungsbatteriepaket (10) verbunden ist und ein Ausgangsende des Resonanzfiltermoduls mit dem Hochspannungsleistungsmodul (20) verbunden ist.

4. Stromversorgungsgarantiesystem nach Anspruch 3, wobei das Resonanzfiltermodul ein erstes Kondensatornetzwerk (C1), ein zweites Kondensatornetzwerk (C2) und ein erstes Induktornetzwerk (L1) umfasst;
ein Ende des ersten Kondensatornetzwerks (C1) mit dem Hochspannungsbatteriepaket (10) verbunden ist, das andere Ende des ersten Kondensatornetzwerks (C1) mit einem Referenzspannungsende verbunden ist, ein Ende des ersten Induktornetzwerks (L1) mit dem Hochspannungsbatteriepaket (10) verbunden ist, das andere Ende des ersten Induktornetzwerks (L1) mit einem Ende des zweiten Kondensatornetzwerks (C2) verbunden ist und das andere Ende des zweiten Kondensatornetzwerks (C2) mit dem Referenzspannungsende verbunden ist.

5. Stromversorgungsgarantiesystem nach Anspruch 1, wobei die Zeitmessvorrichtung (30) eine Echtzeituhr, ein Uhrstromversorgungsende (VCC1), ein Uhreingangsende (IN1) und ein Uhrausgangsende (OUT1) umfasst, wobei
die Zeitmessvorrichtung (30) ferner dazu konfiguriert ist, die Aufwachzeit über das Uhreingangsende (IN1) zu empfangen und die Echtzeituhr gemäß der Aufwachzeit einzustellen; und
die Echtzeituhr die Zeitmessung beginnt, wenn das Batteriemanagementsystem (102) in den Ruhezustand übergeht, und ein Aktivierungssignal über das Uhrausgangsende (OUT1) ausgibt und bereitstellt, wenn die Zeitmessung die Aufwachzeit erreicht.

6. Stromversorgungsgarantiesystem nach Anspruch 1, wobei das Hochspannungsleistungsmodul (20) einen ersten Leistungszugangspunkt (B), ein erstes Spannungsteiler-Widerstandsnetzwerk (R1) und eine zweite Spannungsregeleinheit (DZ2) umfasst, und das Vorwärtsleistungssteuermodul (51) ein Aktivierungsende (Enable) und ein Vorwärtsleistungsversorgungsende (VCC2) umfasst, wobei
der erste Leistungszugangspunkt (B) an einer positiven Elektrode des Hochspannungsbatteriepakets (10) angeordnet ist, ein Ende des ersten Spannungsteiler-Widerstandsnetzwerks (R1) mit dem ersten Leistungszugangspunkt (B) verbunden ist, und das andere Ende des ersten Spannungsteiler-Widerstandsnetzwerks (R1) mit dem Vorwärtsleistungsversorgungsende (VCC2) verbunden ist;
das Hochspannungsleistungsmodul (20) ist ferner dazu konfiguriert, elektrische Energie in dem Hochspannungsbatteriepaket (10) zu verwenden, um eine Arbeitsspannung für das Vorwärtsleistungssteuermodul (51) über den ersten Leistungszugriffspunkt (B), das erste Spannungsteiler-Widerstandsnetzwerk (R1) und die zweite Spannungsregeleinheit (DZ2) bereitzustellen; und
das Vorwärtsleistungssteuermodul (51) ferner dazu konfiguriert ist, das Aktivierungssignal über das Aktivierungsende (Enable) zu empfangen und das Aktivierungssignal zu verwenden, um das Vorwärtsleistungssteuermodul (51) zu bewirken, dass es zu arbeiten beginnt.

7. Stromversorgungsgarantiesystem nach Anspruch 1, wobei das erste Hochspannungsübertragungsmodul eine erste Schaltvorrichtung (Q1) und einen ersten Transformator (T1) umfasst, und das Vorwärtsleistungssteuermodul (51) einen ersten Steuersignalausgangsanschluss (GATE2) umfasst, wobei
das Vorwärtsleistungssteuermodul (51) ferner dazu konfiguriert ist: einen Ein/Aus-Zustand der ersten Schaltvorrichtung (Q1) über den ersten Steuersignalausgangsanschluss (GATE2) zu steuern;
wenn die erste Schaltvorrichtung (Q1) eingeschaltet ist, Energie durch einen ersten Teil (Npl) einer primärseitigen Spule des ersten Transformators (T1) zu speichern; wenn die erste Schaltvorrichtung (Q1) ausgeschaltet ist, die in dem ersten Teil (Npl) der primärseitigen Spule gespeicherte Energie in einen zweiten Teil (Np2) der primärseitigen Spule und eine sekundärseitige Spule (Nsl) des ersten Transformators (T1) einzukoppeln;
wenn die erste Schaltvorrichtung (Q1) ausgeschaltet ist, eine Stromversorgung für das Synchrongleichrichtungsmodul (52) bereitzustellen, indem die mit der sekundärseitigen Spule (Nsl) des ersten Transformators (T1) gekoppelte elektrische Energie verwendet wird; und
unter Verwendung der mit dem zweiten Teil (Np2) der primärseitigen Spule des ersten Transformators (T1) gekoppelten elektrischen Energie dem Vorwärtsleistungssteuermodul (51) elektrische Energie bereitzustellen.

8. Stromversorgungsgarantiesystem nach Anspruch 7, wobei das Leistungsumwandlungsmodul (50) ferner eine erste Gleichrichtungs- und Filtereinheit umfasst, und die erste Gleichrichtungs- und Filtereinheit mit einem Synchrongleichrichtungs-Leistungsversorgungsende (VCC3) des Synchrongleichrichtungsmoduls (52) verbunden ist, wobei
die erste Gleichrichtungs- und Filtereinheit dazu konfiguriert ist, eine Gleichrichtung und Filterung an der elektrischen Energie durchzuführen, die mit der sekundärseitigen Spule (Nsl) des ersten Transformators (T1) gekoppelt ist, und die gleichgerichtete und gefilterte elektrische Energie in das Synchrongleichrichtungs-Leistungsversorgungsende (VCC3) einzugeben.

9. Stromversorgungsgarantiesystem nach Anspruch 8, wobei die erste Gleichrichtungs- und Filtereinheit ein erstes Diodennetzwerk (D1) und ein drittes Kondensatornetzwerk (C3) umfasst, wobei
ein Eingangsende des ersten Diodennetzwerks (D1) mit einem homonymen Ende der sekundärseitigen Spule (Ns1) des ersten Transformators (T1) verbunden ist, ein Ausgangsende des ersten Diodennetzwerks (D1) mit einem Ende des dritten Kondensatornetzwerks (C3) verbunden ist, das andere Ende des dritten Kondensatornetzwerks (C3) mit einem Referenzspannungsende verbunden ist, und ein heteronymes Ende der sekundärseitigen Spule (Ns1) des ersten Transformators (T1) mit dem Referenzspannungsende verbunden ist.

10. Stromversorgungsgarantiesystem nach Anspruch 1, wobei das Vorwärtsleistungssteuermodul (51) einen zweiten Steuersignalausgangsanschluss (GATE1) und einen dritten Steuersignalausgangsanschluss (HOUT) umfasst, das erste Isolations- und Antriebsmodul (53) ein erstes Isolationseingangsende (IN2) und einen ersten Antriebssignalausgangsanschluss (OUT4) umfasst, und das zweite Hochspannungsübertragungsmodul eine zweite Schaltvorrichtung (Q2) und eine dritte Schaltvorrichtung (Q3) umfasst, wobei
das Vorwärtsleistungssteuermodul (51) ferner dazu konfiguriert ist, einen Ein-Zustand der zweiten Schaltvorrichtung (Q2) über ein zweites Steuersignal zu steuern, das von dem zweiten Steuersignalausgangsanschluss (GATE1) ausgegeben wird, ein drittes Steuersignal über den dritten Steuersignalausgangsanschluss (HOUT) auszugeben und das dritte Steuersignal an das erste Isolationseingangsende (IN2) zu übertragen;
das erste Isolations- und Antriebsmodul (53) dazu konfiguriert ist, ein erstes Antriebssignal durch den ersten Antriebssignalausgangsanschluss (OUT4) gemäß dem zweiten Steuersignal auszugeben, das von dem ersten Isolationseingangsende (IN2) empfangen wird, um einen Ein-Zustand der dritten Schaltvorrichtung (Q3) zu steuern; und
das Vorwärtsleistungssteuermodul (51) ferner dazu konfiguriert ist, die Verbindung zwischen dem Hochspannungsbatteriepaket (10) und dem zweiten Hochspannungsübertragungsmodul zu steuern, um einzuschalten, wenn die zweite Schaltvorrichtung (Q2) eingeschaltet ist und die dritte Schaltvorrichtung (Q3) eingeschaltet ist.

11. Stromversorgungsgarantiesystem nach Anspruch 1, wobei das Synchrongleichrichtungsmodul (52) ein Synchrongleichrichtungs-Leistungsversorgungsende (VCC3), einen ersten Synchrongleichrichtungs-Ausgangsanschluss (OUT2) und einen zweiten Synchrongleichrichtungs-Ausgangsanschluss (OUT3) umfasst, und das zweite Hochspannungsübertragungsmodul einen zweiten Transformator (T2), eine vierte Schalteinrichtung (Q4) und eine fünfte Schalteinrichtung (Q5) umfasst, wobei
der erste Synchrongleichrichtungs-Ausgangsanschluss (OUT2) mit einem Steuerende der vierten Schaltvorrichtung (Q4) verbunden ist, ein erstes Lastzugangsende der vierten Schaltvorrichtung (Q4) mit einem heteronymen Ende einer sekundärseitigen Spule (Ns2) des zweiten Transformators (T2) verbunden ist, und ein zweites Lastzugangsende der vierten Schaltvorrichtung (Q4) mit einem Referenzspannungsende verbunden ist;
der zweite Synchrongleichrichtungs-Ausgangsanschluss (OUT3) mit einem Steuerende der fünften Schaltvorrichtung (Q5) verbunden ist, ein erstes Lastzugangsende der fünften Schaltvorrichtung (Q5) mit einem homonymen Ende der sekundärseitigen Spule (Ns2) des zweiten Transformators (T2) verbunden ist und ein zweites Lastzugangsende der fünften Schaltvorrichtung (Q5) mit dem Referenzspannungsende verbunden ist; und
das Synchrongleichrichtungsmodul (52) ferner dazu konfiguriert ist: elektrische Niederspannungsenergie zu erfassen, die von dem zweiten Hochspannungsübertragungsmodul ausgegeben wird; wenn die elektrische Niederspannungsenergie eine Niederspannungsschwellenbedingung erreicht, die vierte Schaltvorrichtung (Q4) und die fünfte Schaltvorrichtung (Q5) zu steuern, um sie einzuschalten; und die elektrische Niederspannungsenergie über die vierte Schaltvorrichtung (Q4) und die fünfte Schaltvorrichtung (Q5), die eingeschaltet sind, an das Batteriemanagementsystem (102) zu übertragen.

12. Stromversorgungsgarantiesystem nach Anspruch 1, wobei das Leistungsumwandlungsmodul (50) eine zweite Gleichrichtungs- und Filtereinheit umfasst, und die zweite Gleichrichtungs- und Filtereinheit mit einem Ausgangsende des zweiten Hochspannungsübertragungsmoduls verbunden ist, wobei
die zweite Gleichrichtungs- und Filtereinheit dazu konfiguriert ist, eine Gleichrichtung und Filterung an der synchron gleichgerichteten elektrischen Niederspannungsenergie durchzuführen und die gleichgerichtete und gefilterte elektrische Niederspannungsenergie an das Batteriemanagementsystem (102) zu übertragen.

13. Stromversorgungsgarantiesystem nach Anspruch 11, wobei das Stromversorgungsgarantiesystem ferner eine zweite Gleichrichtungs- und Filtereinheit umfasst, und die zweite Gleichrichtungs- und Filtereinheit ein zweites Induktionsnetzwerk (L2) und ein viertes Kondensatornetzwerk (C4) umfasst;
ein Ende des zweiten Induktionsnetzwerks (L2) mit dem homonymen Ende der sekundärseitigen Spule (Ns2) des zweiten Transformators (T2) verbunden ist, das andere Ende des zweiten Induktionsnetzwerks (L2) mit einem Ende des vierten Kondensatornetzwerks (C4) verbunden ist, und das andere Ende des vierten Kondensatornetzwerks (C4) mit dem Referenzspannungsende verbunden ist.

14. Stromversorgungsgarantieverfahren (500), das auf das Stromversorgungsgarantiesystem nach einem der Ansprüche 1 bis 13 anwendbar ist, **dadurch gekennzeichnet, dass** das Stromversorgungsgarantieverfahren umfasst:
Empfangen einer Aufwachzeit durch ein Hauptsteuermodul (40) und Senden der empfangenen Aufwachzeit an eine Zeitmessvorrichtung (30) (S510);
Bereitstellen einer konstanten Energieversorgung für die Zeitmessvorrichtung (30) durch ein Hochspannungsleistungsmodul (20) gemäß der elektrischen Energie in einem Hochspannungsbatteriepaket (10) (S520);
Einstellen einer Aufwachuhr durch die Zeitmessvorrichtung (30) gemäß der Aufwachzeit, Starten der Zeitmessung, wenn ein Batteriemanagementsystem (102) in den Ruhezustand übergeht, und Senden einer Entladeanweisung an das Hochspannungsbatteriepaket (10), wenn die Zeitmessung der Zeitmessvorrichtung (30) die Aufwachzeit erreicht (S530); und
Umwandeln von elektrischer Hochspannungsenergie in elektrische Niederspannungsenergie durch ein Leistungsumwandlungsmodul (50) und Verwenden der elektrischen Niederspannungsenergie zum Versorgen des Batteriemanagementsystems (102), wobei die elektrische Hochspannungsenergie von dem Hochspannungsbatteriepaket (10) gemäß der Entladeanweisung ausgegeben wird (S540);
wobei das Leistungsumwandlungsmodul (50) umfasst: ein Vorwärtsleistungssteuermodul (51), ein erstes Hochspannungsübertragungsmodul, ein Synchrongleichrichtungsmodul (52), ein erstes Isolations- und Antriebsmodul (53) und ein zweites Hochspannungsübertragungsmodul, wobei das erste Hochspannungsübertragungsmodul und das zweite Hochspannungsübertragungsmodul nicht dasselbe Modul sind,
wobei das Verfahren ferner umfasst:
Bereitstellen, durch die Zeitmessvorrichtung (30), eines Aktivierungssignals für das Vorwärtsleistungssteuermodul (51), wenn die Zeitmessung die Aufwachzeit erreicht, so dass das Vorwärtsleistungssteuermodul (51) unter der Steuerung des Aktivierungssignals zu arbeiten beginnt;
Bereitstellen einer Stromversorgung für das Synchrongleichrichtungsmodul (52) durch das erste Hochspannungsübertragungsmodul mittels des Vorwärtsleistungssteuerungsmoduls (51);
Umwandeln von elektrischer Hochspannungsenergie in dem Hochspannungsbatteriepaket (10) in elektrische Niederspannungsenergie durch das zweite Hochspannungsübertragungsmodul, wenn die Verbindung zwischen dem zweiten Hochspannungsübertragungsmodul und dem Hochspannungsbatteriepaket (10) eingeschaltet wird; und
Durchführen einer Synchrongleichrichtung an der elektrischen Niederspannungsenergie durch das Synchrongleichrichtungsmodul (52) und Verwenden der synchron gleichgerichteten elektrischen Niederspannungsenergie durch das Synchrongleichrichtungsmodul (52), um das Batteriemanagementsystem (102) zu versorgen,
**gekennzeichnet durch** die Steuerung eines Einschaltzustandes der Verbindung zwischen dem Hochspannungsbatteriepaket (10) und dem zweiten Hochspannungsübertragungsmodul durch das erste Isolations- und Antriebsmodul (53) mittels des Vorwärtsleistungssteuermoduls (51).

## Revendications

1. Système de garantie d'alimentation électrique, applicable à un système de gestion de batteries (102), **caractérisé en ce que** le système de garantie d'alimentation électrique comprend : un module de commande principal (40), un bloc-batterie à haute tension (10), un module d'alimentation électrique à haute tension (20), un dispositif de chronométrage (30) et un module de conversion d'alimentation électrique (50), dans lequel
le module de commande principal (40) est configuré pour envoyer une heure de réveil reçue vers le dispositif de chronométrage (30) ;
le module d'alimentation électrique à haute tension (20) est configuré pour alimenter le dispositif de chronométrage (30) en fonction de l'énergie électrique dans le bloc-batterie à haute tension (10) ;
le dispositif de chronométrage (30) est configuré pour définir une horloge de réveil en fonction de l'heure de réveil, démarrer le chronométrage lorsque le système de gestion de batteries (102) entre en veille, et émettre une instruction de décharge au bloc-batterie à haute tension (10) lorsque l'heure de chronométrage atteint l'heure de réveil, et
le module de conversion d'alimentation électrique (50) est configuré pour convertir l'énergie électrique à haute tension en énergie électrique à basse tension, et utiliser l'énergie électrique à basse tension pour alimenter le système de gestion de batteries (102), l'énergie électrique à haute tension étant fourni par le bloc-batterie à haute tension (10) en fonction de l'instruction de décharge,
dans lequel le module de conversion d'alimentation électrique (50) comprend : un module de commande d'alimentation électrique directe (51), un premier module de transmission à haute tension, un module de redressement synchrone (52), un premier module d'isolement et d'entraînement (53), et un deuxième module de transmission à haute tension, le premier module de transmission à haute tension et le deuxième module de transmission à haute tension n'étant pas le même module, dans lequel,
le dispositif de chronométrage (30) est configuré en outre pour envoyer un signal d'activation au module de commande d'alimentation électrique directe (51) lorsque l'heure de chronométrage atteint l'heure de réveil, de sorte que le module de commande d'alimentation électrique directe (51) se met à fonctionner sous commande du signal d'activation ;
le module de commande d'alimentation électrique directe (51) est configuré pour alimenter le module de redressement synchrone (52) à travers le premier module de transmission à haute tension ; et
le deuxième module de transmission à haute tension est configuré pour convertir l'énergie électrique à haute tension dans le bloc-batterie à haute tension (10) en énergie électrique à basse tension lorsque la connexion entre le deuxième module de transmission à haute tension et le bloc-batterie à haute tension (10) est activée ; et
le module de redressement synchrone (52) est configuré pour effectuer un redressement synchrone sur l'énergie électrique à basse tension, et utiliser l'énergie électrique à basse tension synchroniquement redressée pour alimenter le système de gestion de batteries (102), **caractérisé en ce que** le module de commande d'alimentation électrique directe (51) est configuré pour commander un état de connexion activée entre le bloc-batterie à haute tension (10) et le deuxième module de transmission à haute tension à travers le premier module d'isolement et d'entraînement (53).

2. Système de garantie d'alimentation électrique selon la revendication 1, dans lequel le module d'alimentation électrique à haute tension (20) comprend un premier point d'accès à alimentation électrique (B), un premier réseau de résistances de division de tension (R1), un deuxième réseau de résistances de division de tension (R2) et une première unité de stabilisation de tension (DZ1), et le dispositif de chronométrage (30) comprend une extrémité d'alimentation électrique d'horloge (VCC1), dans lequel,
le premier point d'accès à alimentation électrique (B) est situé au niveau d'une électrode positive du bloc-batterie à haute tension (10), une extrémité du premier réseau de résistances de division de tension (R1) est connectée au premier point d'accès à alimentation électrique (B), l'autre extrémité du premier réseau de résistances de division de tension (R1) est connectée à une extrémité du deuxième réseau de résistances de division de tension (R2), l'autre extrémité du deuxième réseau de résistances de division de tension (R2) est connectée à l'extrémité d'alimentation électrique d'horloge (VCC1), une extrémité de la première unité de stabilisation de tension (DZ1) est connectée à l'extrémité d'alimentation électrique d'horloge (VCC1) et l'autre extrémité de la première unité de stabilisation de tension (DZ1) est connectée à une extrémité de tension de référence.

3. Système de garantie d'alimentation électrique selon la revendication 1, dans lequel le module de conversion d'alimentation électrique (50) comprend un module de filtre résonant, une extrémité d'entrée du module de filtre résonant est connectée au bloc-batterie à haute tension (10) et une extrémité de sortie du module de filtre résonant est connectée au module d'alimentation électrique à haute tension (20).

4. Système de garantie d'alimentation électrique selon la revendication 3, dans lequel le module de filtre résonant comprend un premier réseau de condensateurs (C1), un deuxième réseau de condensateurs (C2) et un premier réseau d'inducteurs (L1) ;
une extrémité du premier réseau de condensateurs (C1) est connectée au bloc-batterie à haute tension (10), l'autre extrémité du premier réseau de condensateurs (C1) est connectée à une extrémité de tension de référence, une extrémité du premier réseau d'inducteurs (L1) est connectée au bloc-batterie à haute tension (10), l'autre extrémité du premier réseau d'inducteurs (L1) est connectée à une extrémité du deuxième réseau de condensateurs (C2), et l'autre extrémité du deuxième réseau de condensateurs (C2) est connectée à l'extrémité de tension de référence.

5. Système de garantie d'alimentation électrique selon la revendication 1, dans lequel le dispositif de chronométrage (30) comprend une horloge en temps réel, une extrémité d'alimentation électrique d'horloge (VCC1), une extrémité d'entrée d'horloge (IN1) et une extrémité de sortie d'horloge (OUT1), et dans lequel,
le dispositif de chronométrage (30) est configuré en outre pour recevoir l'heure de réveil à travers l'extrémité d'entrée d'horloge (IN1), et définir l'horloge en temps réel en fonction de l'heure de réveil ; et
l'horloge en temps réel commence le chronométrage lorsque le système de gestion de batteries (102) entre en veille, et émet et envoie un signal d'activation à travers l'extrémité de sortie d'horloge (OUT1) lorsque l'heure de chronométrage atteint l'heure de réveil.

6. Système de garantie d'alimentation électrique selon la revendication 1, dans lequel le module d'alimentation électrique à haute tension (20) comprend un premier point d'accès à alimentation électrique (B), un premier réseau de résistances de division de tension (R1) et une deuxième unité de stabilisation de tension (DZ2), et le module de commande d'alimentation électrique directe (51) comprend une extrémité d'activation (Enable) et une extrémité d'alimentation électrique directe (VCC2), dans lequel,
le premier point d'accès à alimentation électrique (B) est situé au niveau d'une électrode positive du bloc-batterie à haute tension (10), une extrémité du premier réseau de résistances de division de tension (R1) est connectée au premier point d'accès à alimentation électrique (B) et l'autre extrémité du premier réseau de résistances de division de tension (R1) est connectée à l'extrémité d'alimentation électrique directe (VCC2) ;
le module d'alimentation électrique à haute tension (20) est configuré en outre pour utiliser l'énergie électrique dans le bloc-batterie à haute tension (10) pour fournir une tension de fonctionnement au module de commande d'alimentation électrique directe (51) à travers le premier point d'accès à alimentation électrique (B), le premier réseau de résistances de division de tension (R1) et la deuxième unité de stabilisation de tension (DZ2) ; et
le module de commande d'alimentation électrique directe (51) est configuré en outre pour recevoir le signal d'activation à travers l'extrémité d'activation (Enable), et utiliser le signal d'activation pour faire fonctionner le module de commande d'alimentation électrique directe (51).

7. Système de garantie d'alimentation électrique selon la revendication 1, dans lequel le premier module de transmission à haute tension comprend un premier dispositif de commutation (Q1) et un premier transformateur (T1), et le module de commande d'alimentation électrique directe (51) comprend un premier port de sortie de signal de commande (GATE2), dans lequel,
le module de commande d'alimentation électrique directe (51) est configuré en outre pour : commander un état activé/désactivé du premier dispositif de commutation (Q1) à travers le premier port de sortie de signal de commande (GATE2) ;
lorsque le premier dispositif de commutation (Q1) est activé, stocker l'énergie à travers une première partie (Np1) d'une bobine de côté primaire du premier transformateur (T1) ; lorsque le premier dispositif de commutation (Q1) est désactivé, coupler l'énergie stockée dans la première partie (Np1) de la bobine de côté primaire à une deuxième partie (Np2) de la bobine de côté primaire et à une bobine de côté secondaire (Ns1) du premier transformateur (T1) ;
lorsque le premier dispositif de commutation (Q1) est désactivé, alimenter le module de redressement synchrone (52) en utilisant l'énergie électrique couplée à la bobine de côté secondaire (Ns1) du premier transformateur (T1) ; et
fournir l'énergie électrique au module de commande d'alimentation électrique directe (51) en utilisant l'énergie électrique couplée à la deuxième partie (Np2) de la bobine de côté primaire du premier transformateur (T1).

8. Système de garantie d'alimentation électrique selon la revendication 7, dans lequel le module de conversion d'alimentation électrique (50) comprend en outre une première unité de redressement et de filtrage, et la première unité de redressement et de filtrage est connectée à une extrémité d'alimentation électrique de redressement synchrone (VCC3) du module de redressement synchrone (52), dans lequel,
la première unité de redressement et de filtrage est configurée pour effectuer un redressement et un filtrage sur l'énergie électrique couplée à la bobine de côté secondaire (Ns1) du premier transformateur (T1), et entrer l'énergie électrique redressée et filtrée dans l'extrémité d'alimentation électrique de redressement synchrone (VCC3).

9. Système de garantie d'alimentation électrique selon la revendication 8, dans lequel la première unité de redressement et de filtrage comprend un premier réseau de diodes (D1) et un troisième réseau de condensateurs (C3), dans lequel,
une extrémité d'entrée du premier réseau de diodes (D1) est connectée à une extrémité homonyme de la bobine de côté secondaire (Ns1) du premier transformateur (T1), une extrémité de sortie du premier réseau de diodes (D1) est connectée à une extrémité du troisième réseau de condensateurs (C3), l'autre extrémité du troisième réseau de condensateurs (C3) est connectée à une extrémité de tension de référence, et une extrémité hétéronyme de la bobine de côté secondaire (Ns1) du premier transformateur (T1) est connectée à l'extrémité de tension de référence.

10. Système de garantie d'alimentation électrique selon la revendication 1, dans lequel le module de commande d'alimentation électrique directe (51) comprend un deuxième port de sortie de signal de commande (GATE1) et un troisième port de sortie de signal de commande (HOUT), le premier module d'isolement et d'entraînement (53) comprend une première extrémité d'entrée d'isolement (IN2) et un premier port de sortie de signal d'entraînement (OUT4), et le deuxième module de transmission à haute tension comprend un deuxième dispositif de commutation (Q2) et un troisième dispositif de commutation (Q3), dans lequel,
le module de commande d'alimentation électrique directe (51) est configuré en outre pour commander un état activé du deuxième dispositif de commutation (Q2) à travers une deuxième sortie de signal de commande par le deuxième port de sortie de signal de commande (GATE1), émettre un troisième signal de commande à travers le troisième port de sortie de signal de commande (HOUT) et transmettre le troisième signal de commande à la première extrémité d'entrée d'isolement (IN2) ;
le premier module d'isolement et d'entraînement (53) est configuré pour émettre un premier signal d'entraînement à travers le premier port de sortie de signal d'entraînement (OUT4) en fonction du deuxième signal de commande reçu par la première extrémité d'entrée d'isolement (IN2), afin de commander un état activé du troisième dispositif de commutation (Q3) ; et
le module de commande d'alimentation électrique directe (51) est configuré en outre pour commander la connexion entre le bloc-batterie à haute tension (10) et le deuxième module de transmission à haute tension à être activé lorsque le deuxième dispositif de commutation (Q2) est activé et que le troisième dispositif de commutation (Q3) est activé.

11. Système de garantie d'alimentation électrique selon la revendication 1, dans lequel le module de redressement synchrone (52) comprend une extrémité d'alimentation électrique de redressement synchrone (VCC3), un premier port de sortie de redressement synchrone (OUT2) et un deuxième port de sortie de redressement synchrone (OUT3), et le deuxième module de transmission à haute tension comprend un deuxième transformateur (T2), un quatrième dispositif de commutation (Q4) et un cinquième dispositif de commutation (Q5), dans lequel,
le premier port de sortie de redressement synchrone (OUT2) est connecté à une extrémité de commande du quatrième dispositif de commutation (Q4), une première extrémité d'accès à charge du quatrième dispositif de commutation (Q4) est connectée à une extrémité hétéronyme d'une bobine de côté secondaire (Ns2) du deuxième transformateur (T2), et une deuxième extrémité d'accès à charge du quatrième dispositif de commutation (Q4) est connectée à une extrémité de tension de référence ;
le deuxième port de sortie de redressement synchrone (OUT3) est connecté à une extrémité de commande du cinquième dispositif de commutation (Q5), une première extrémité d' accès à charge du cinquième dispositif de commutation (Q5) est connectée à une extrémité homonyme de la bobine de côté secondaire (Ns2) du deuxième transformateur (T2), et une deuxième extrémité d'accès à charge du cinquième dispositif de commutation (Q5) est connectée à l'extrémité de tension de référence ; et
le module de redressement synchrone (52) est configuré en outre pour : détecter une sortie d'énergie électrique à basse tension par le deuxième module de transmission à haute tension ; lorsque l'énergie électrique à basse tension satisfait à une condition de seuil de basse tension, commander le quatrième dispositif de commutation (Q4) et le cinquième dispositif de commutation (Q5) à être activés ; et transmettre l'énergie électrique à basse tension au système de gestion de batteries (102) à travers le quatrième dispositif de commutation (Q4) et le cinquième dispositif de commutation (Q5) qui sont activés.

12. Système de garantie d'alimentation électrique selon la revendication 1, dans lequel le module de conversion d'alimentation électrique (50) comprend une deuxième unité de redressement et de filtrage, et la deuxième unité de redressement et de filtrage est connectée à une extrémité de sortie du deuxième module de transmission à haute tension, dans lequel,
la deuxième unité de redressement et de filtrage est configurée pour effectuer un redressement et un filtrage sur l'énergie électrique à basse tension synchroniquement redressée, et transmettre l'énergie électrique à basse tension redressée et filtrée au système de gestion de batteries (102).

13. Système de garantie d'alimentation électrique selon la revendication 11, dans lequel le système de garantie d'alimentation comprend en outre une deuxième unité de redressement et de filtrage, et la deuxième unité de redressement et de filtrage comprend un deuxième réseau d'inducteurs (L2) et un quatrième réseau de condensateurs (C4) ;
une extrémité du deuxième réseau d'inducteurs (L2) est connectée à l'extrémité homonyme de la bobine de côté secondaire (Ns2) du deuxième transformateur (T2), l'autre extrémité du deuxième réseau d'inducteurs (L2) est connectée à une extrémité du quatrième réseau de condensateurs (C4) et l'autre extrémité du quatrième réseau de condensateurs (C4) est connectée à l'extrémité de tension de référence.

14. Procédé de garantie d'alimentation électrique (500), applicable au système de garantie d'alimentation électrique selon l'une quelconque des revendications 1 à 13, **caractérisé en ce que** le procédé de garantie d'alimentation électrique comprend :
recevoir, par un module de commande principal (40), une heure de réveil et envoyer l'heure de réveil vers le dispositif de chronométrage (30) (S510) ;
fournir, par un module d'alimentation électrique à haute tension (20), une alimentation électrique constante au dispositif de chronométrage (30) en fonction de l'énergie électrique dans le bloc-batterie à haute tension (10) (S520) ;
définir, par le dispositif de chronométrage (30), une horloge de réveil en fonction de l'heure de réveil, démarrer le chronométrage lorsqu'un système de gestion de batteries (102) entre en veille, et émettre une instruction de décharge au bloc-batterie à haute tension (10) lorsque l'heure de chronométrage du dispositif de chronométrage (30) atteint l'heure de réveil (S530) ; et
convertir, par un module de conversion d'alimentation électrique (50), une énergie électrique à haute tension en énergie électrique à basse tension, et utiliser l'énergie électrique à basse tension pour alimenter le système de gestion de batteries (102), l'énergie électrique à haute tension étant fourni par le bloc-batterie à haute tension (10) en fonction de l'instruction de décharge (S540) ;
dans lequel le module de conversion d'alimentation électrique (50) comprend : un module de commande d'alimentation électrique directe (51), un premier module de transmission à haute tension, un module de redressement synchrone (52), un premier module d'isolement et d'entraînement (53), et un deuxième module de transmission à haute tension, le premier module de transmission à haute tension et le deuxième module de transmission à haute tension n'étant pas le même module,
dans lequel le procédé comprend en outre :
envoyer, par le dispositif de chronométrage (30), un signal d'activation au module de commande d'alimentation électrique directe (51) lorsque l'heure de chronométrage atteint l'heure de réveil, de sorte que le module de commande d'alimentation électrique directe (51) se met à fonctionner sous commande du signal d'activation ;
alimenter, par le module de commande d'alimentation électrique directe (51), le module de redressement synchrone (52) à travers le premier module de transmission à haute tension ;
convertir, par le deuxième module de transmission à haute tension, l'énergie électrique à haute tension dans le bloc-batterie à haute tension (10) en énergie électrique à basse tension lorsque la connexion entre le deuxième module de transmission à haute tension et le bloc-batterie à haute tension (10) est activée ; et
effectuer, par le module de redressement synchrone (52), un redressement synchrone sur l'énergie électrique à basse tension, et utiliser, par le module de redressement synchrone (52), l'énergie électrique à basse tension synchroniquement redressée pour alimenter le système de gestion de batteries (102), **caractérisé en ce que** le module de commande d'alimentation électrique directe (51) commande un état de connexion activée entre le bloc-batterie à haute tension (10) et le deuxième module de transmission à haute tension à travers le premier module d'isolement et d'entraînement (53).
